# EUROPEAN PATENT SPECIFICATION

(11) **EP 1 807 834 B1**
(45) Date of publication and mention of the grant of the patent: **17.09.2008**
(21) Application number: 05808730.5
(22) Date of filing: 12.10.2005
(51) Int. Cl.: G11B 7/26, G11B 7/243

(54) **MASTER SUBSTRATE AND METHOD OF MANUFACTURING A HIGH-DENSITY RELIEF STRUCTURE**
MASTERSUBSTRAT UND VERFAHREN ZUR HERSTELLUNG EINER HOCHDICHTEN RELIEFSTRUKTUR
SUBSTRAT MAITRE ET PROCEDE DE FABRICATION D'UNE STRUCTURE EN RELIEF HAUTE DENSITE

(30) Priority: 19.10.2004 EP 04105151
(43) Date of publication of application: 18.07.2007
(73) Proprietor: Moser Baer India Ltd., 110020 New Delhi (IN)
(72) Inventor: MEINDERS, Erwin, R., NL-5656 AA Eindhoven (NL); LOCH, Rolf, A., NL-5656 AA Eindhoven (NL)
(74) Representative: Valkonet, Rutger
(86) International application number: PCT/IB2005/053352
(87) International publication number: WO 2006/043212

(56) References cited:
- DE-A1- 4 005 315
- US-A- 4 615 969
- US-A- 5 051 340
- US-A1- 2002 132 082
- PATENT ABSTRACTS OF JAPAN vol. 1998, no. 09, 31 July 1998 (1998-07-31) & JP 10 097738 A (MATSUSHITA ELECTRIC IND CO LTD), 14 April 1998 (1998-04-14)
- PATENT ABSTRACTS OF JAPAN vol. 015, no. 331 (P-1241), 22 August 1991 (1991-08-22) & JP 03 120638 A (FUJITSU LTD), 22 May 1991 (1991-05-22)

## Description

### FIELD OF THE INVENTION

The present invention relates to a master substrate and to a method of manufacturing a high-density relief structure.

### BACKGROUND OF THE INVENTION

Relief structures that are manufactured on the basis of optical processes can, for example, be used as a stamper for the mass-replication of read-only memory (ROM) and pre-grooved write-once (R) and rewritable (RE) discs. The manufacturing of such a stamper, as used in a replication process, is known as mastering.

In conventional mastering, a thin photosensitive layer, spincoated on a glass substrate, is illuminated with a modulated focused laser beam. The modulation of the laser beam causes that some parts of the disc are being exposed by UV light while the intermediate areas in between the pits remain unexposed. While the disc rotates, and the focused laser beam is gradually pulled to the outer side of the disc, a spiral of alternating illuminated areas remains. In a second step, the exposed areas are being dissolved in a so-called development process to end up with physical holes inside the photo-resist layer. Alkaline liquids such as NaOH and KOH are used to dissolve the exposed areas. The structured surface is subsequently covered with a thin Ni layer. In a galvanic process, this sputter-deposited Ni layer is further grown to a thick manageable Ni substrate with the inverse pit structure. This Ni substrate with protruding bumps is separated from the substrate with unexposed areas and is called the stamper.

ROM discs contain a spiral of alternating pits and lands representing the encoded data. A reflection layer (metallic or other kind of material with different index of refraction coefficient) is added to facilitate the readout of the information. In most of the optical recording systems, the data track pitch has the same order of magnitude as the size of the optical readout/write spot to ensure optimum data capacity. Compare for example the data track pitch of 320 nm and the 1/e spot radius of 305 nm (1/e is the radius at which the optical intensity has reduced to 1/e of the maximum intensity) in case of Blue-ray Disc (BD). In contrary to write-once and rewritable optical master substrates, the pit width in a ROM disc is typically half of the pitch between adjacent data tracks. Such small pits are necessary for optimum readout. It is well known that ROM discs are read out via phase-modulation, i.e. the constructive and destructive interference of light rays. During readout of longer pits, destructive interference between light rays reflected from the pit bottom and reflected form the adjacent land plateau occurs, which leads to a lower reflection level.

Mastering of a pit structure with pits of approximately half the optical readout spot typically requires a laser with a lower wavelength than is used for readout. For CD/DVD mastering, the Laser Beam Recorder (LBR) typically operates at a wavelength of 413 nm and numerical aperture of the objective lens of NA=0.9. For BD mastering, a deep UV laser with 257 nm wavelength is used in combination with a high NA lens (0.9 for far-field and 1.25 for liquid immersion mastering). In other words, a next generation LBR is required to make a stamper for the current optical disc generation. An additional disadvantage of conventional photoresist mastering is the cumulative photon effect. The degradation of the photo-sensitive compound in the photoresist layer is proportional to the amount of illumination. The sides of the focused Airy spot also illuminates the adjacent traces during writing of pits in the central track. This multiple exposure leads to local broadening of the pits and therefore to an increased pit noise (jitter). Also for reduction of cross-illumination, an as small as possible focused laser spot is required. Another disadvantage of photoresist materials as used in conventional mastering is the length of the polymer chains present in the photoresist. Dissolution of the exposed areas leads to rather rough side edges due to the long polymer chains. In particular in case of pits (for ROM) and grooves (for pre-grooved substrates for write-once (R) and rewritable (RE) applications) this edge roughness may lead to deterioration of the readout signals of the pre-recorded ROM pits and recorded R/RE data.

As mentioned, the high-density relief structure can for example be used for the replication of optical discs. The data, encoded in pits of different length, is readout via phase modulation. The pit shape, in particular the pit depth, is optimized to obtain optimum readout characteristics. For BD-ROM discs, the pit depth is typically around 80 nm. An as steep as possible wall is preferred, angles between 60 and 80 degrees are pursued.

It is an object of the invention to provide a master record that develops to a high-density relief structure with pits that are characterized by steep walls.

US 5,051,340 discloses a method for preparing a master for the replication of optical elements including the steps of: (a) focusing an information modulated energy beam on a phase-change optical recording layer so as to form a pattern of two different phases in said layer corresponding to said information; and (b) selectively etching away one of said two different phases so as to form a relief pattern corresponding to said information. The master so made can be used directly as the stamper in the injection molding process or the 2-P process for the replication of optical elements.

### SUMMARY OF THE INVENTION

The above objects are solved by the features of the independent claims. Further developments and preferred embodiments of the invention are outlined in the dependent claims.

According to the present invention, a master substrate for optical recording is provided comprising a substrate layer and a multi-layer stack, said stack comprising a first recording layer and a second recording layer above the substrate layer, and an interface layer between the first recording layer and the second recording layer, the recording layers comprising a phase-change material, the properties with respect to chemical agents of which may be altered due to a phase-change induced by projecting light on the recording layers. The phase change is particularly induced by the heat deposited due to the projected light. Generally, phase-change materials have a rather high absorbance. This absorption of light is required to enable melting of the recording layer for mark formation. A phase-change layer of more than 50 nm thickness is optically closed, meaning that only a small amount of the incident light reaches the bottom. As a consequence, the temperature profile decays with the depth of the layer. The molten area has therefore a conical shape, the deeper in the layer, the narrower the amorphous area. After dissolution in a developer, a pit remains with small wall angles. The readout of the shortest pits, a 2T, T being the channel bit length, in case of BD-ROM, is then hampered and leads to a deterioration of the recovery of the encoded data. In this context, it is mentioned that a significant improvement of the data quality was achieved by applying a thin metallic interface layer in between the photoresist and substrate in case of conventional mastering. The metallic layer also improved the wall steepness of the formed pits. Now, on the basis of the present invention, a relief structure with deep pits having steep walls can be provided. The recording materials are preferably so-called fast-growth phase-change materials, preferably of the composition: SnGeSb (Sn_{18.3} - Ge_{12.6} - Sb_{69.2} (At %)) or Sb₂Te doped with In, Ge etc, such as InGeSbTe. A data pattern is written in this recording layer that can be transformed to a relief structure via etching. The thickness of the recording layers is between 5 and 40 nm, preferably between 10 and 15 nm.

According to a preferred embodiment, an interface layer is provided below the second recording layer. The interface layers are etchable as well. The thickness is between 5 and 50, preferably between 10 and 15 nm. The preferred material is ZnS-SiO2.

The present invention is realized with embodiments, wherein said stack comprises n pairs, n ≥ 2, of recording layers and associated interface layers. By more than two recording layer, e.g. three recording layer, deeper pit can be achiever that still provide the desired wall steepness.

Preferably, a heat-sink layer is provided directly on top of the substrate. The heat sink-layer is preferably made from metal. The metallic layer serves as heat sink layer to remove the heat during recording to enable melt-quenching. Suitable metals are Ag, Al, etc. The preferred layer thickness is between 15 and 150 nm.

According to one embodiment of the present invention, the phase-change material of the first and the second recording layers is the same. In this case, the molten area created in the second recording layer is smaller than that created in the first recording layer. The re-crystallization of the amorphous mark is more or less similar in both recording layers. After etching, a pit remains with a staircase wall. This pit shape is very suitable for multi-level recording.

According to a further embodiment, the phase-change materials of the first and the second recording layers are different. On the basis of a variation of the properties of the phase-change materials, the shape of the pits can be modified.

For example, the phase-change material in the first recording layer is of a faster type than the phase-change material in the second recording layer. The molten area created in the second recording layer is smaller but is subjected to less re-crystallization. The molten area in the first recording layer is larger but the amorphous mark is subjected to more re-crystallization. The result is an amorphous mark of approximately the same size in both the first and second recording layer. After etching, a pit remains with a very steep wall.

According to another example, the phase-change material in the first recording layer is of a slower type than the phase-change material in the second recording layer. The molten area created in the second recording layer is smaller and is also subjected to more re-crystallization. The molten area in the first recording layer is larger and is also subjected to less re-crystallization. The amorphous mark in the first recording layer is then substantially larger than that in the second recording layer. After etching, a pit remains with a staircase wall. This pit shape is very suitable for multi-level recording.

According to a still further example, the melt-temperature of the phase-change material in the first recording layer is higher than the melt-temperature of the phase-change material in the second recording layer. The molten area in the first recording layer is then substantially smaller than that in the second recording layer. After re-crystallization, the amorphous mark in the first recording layer is of approximately the same size as that in the second recording layer. After etching, a pit remains with a very steep wall.

It is also possible that the melt-temperature of the phase-change material in the first recording layer is lower than the melt-temperature of the phase-change material in the second recording layer. The molten area in the first recording layer is then substantially larger than that in the second recording layer. After re-crystallization, the amorphous mark in the first recording layer is substantially larger than that in the second recording layer. After etching, a pit remains with a staircase wall. This pit shape is very suitable for multi-level recording.

The present invention is also directed to a method of manufacturing a high density relief structure on a master substrate, the master substrate comprising a substrate layer and a multi-layer stack, said stack comprising a first recording layer and a second recording layer above the substrate layer, and an interface layer between the first recording layer the second recording layer, the recording layers comprising a phase-change material, the method comprising the step of projecting light on the recording layers, thereby altering the properties with respect to chemical agents of the recording layers due to a phase-change of the recording layers.

### BRIEF DESCRIPTION OF THE DRAWINGS

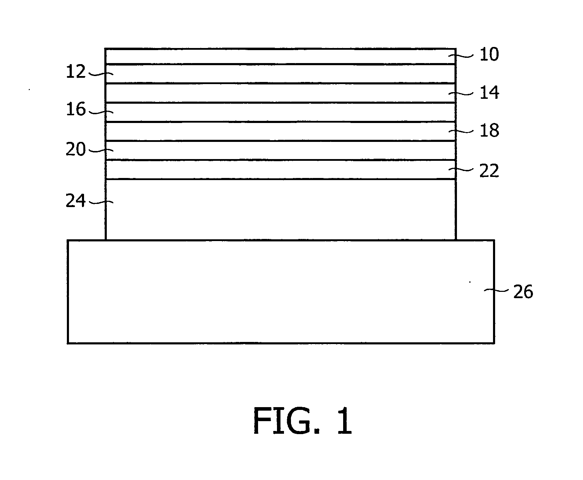

Figure 1 shows a schematic cross section through a master substrate according to the present invention;
Figure 2 shows a data pattern written on a master substrate using a first laser power according to the present invention in two different representations;
Figure 3 shows a data pattern written on a master substrate using a second laser power according to the present invention in two different representations;
Figure 4 shows an enlarged image of a pit written with the second laser power;
Figure 5 shows a data pattern written on a master substrate according to the present invention in two different representations;
Figure 6 shows a diagram for comparing a single recording layer to a recording stack according to the present invention with respect to recording depth and mark width.

### DESCRIPTION OF PREFERRED EMBODIMENTS

The top layer of the recording stack is a protection layer 10 made of a material that well dissolves in conventional developer liquids, such as KOH and NaOH. The protection layer is preferably made from ZnS-SiO₂ or photoresist. The protection layer should be resistant to the high recording temperature of around 600-700°C in case of amorphous writing. The layer thickness is between 5 and 100 nm, preferably between 10 and 25 nm. Underneath the protection layer 10, a first recording layer 12 is provided. The recording materials are preferably so-called fast-growth phase-change materials, preferably of the composition: SnGeSb (Sn_{18.3} - Ge_{12.6} - Sb_{69.2} (At %)) or Sb₂Te doped with In, Ge etc., such as InGeSbTe. A data pattern is written in this recording layer 12 that can be transformed to a relief structure via etching. The thickness of the recording layer 12 is between 5 and 40 nm, preferably between 10 and 15 nm. The first recording layer 12 is followed by an interface layer 14 which is then followed by a second recording layer 16. This second recording layer 16 has comparable properties as the first recording layer 12; it is also possible that the recording layers 12 and 16 are different. The second recording layer 16 may be followed by a second interface layer 18. The interface layers are etchable as well. The thickness of the interface layers is between 5 and 50, preferably between 10 and 15 nm. The preferred material is ZnS-SiO₂ The two pairs of recording layers 12, 16 and interface layers 14, 18 can be followed by one or more further pairs of recording layers 20 and interface layers 22. This stack is followed by a metallic layer 24 that serves as a heat sink layer to remove the heat during recording to enable melt-quenching. Suitable metals are Ag, Al, etc. The preferred layer thickness is between 15 and 150 nm. The number of recording layers and interface layers can be increased, a formulation for such a multi-layer stack is C(PI)ₙM, with C: protection layer; P: recording layer; I: interface layer; M: metallic layer; n ≥ 2. The whole stack is carried by a substrate 26.

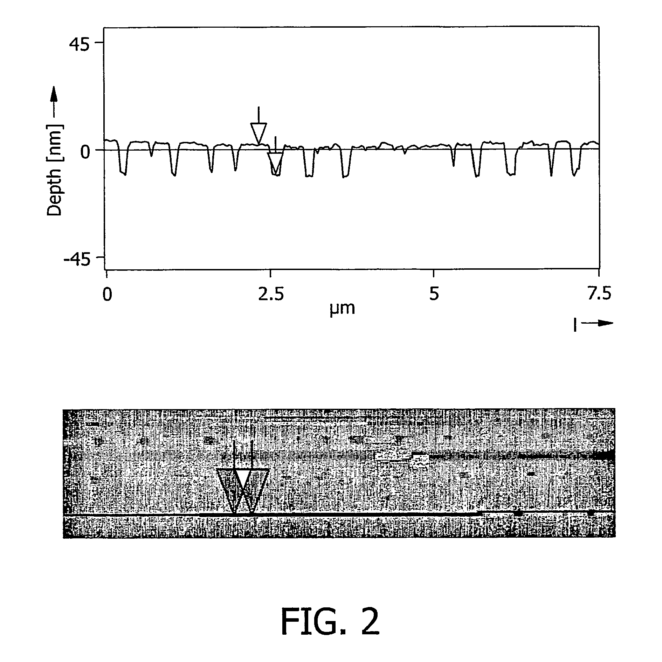

Figures 2 to 5 show the result of experiments that have been performed on a C(PI)ₙ₌₃M-stack, where the protection layer was a photoresist having a thickness of 25 nm, the recording layers were made of InGeSbTe with a thickness of 10 nm, and the interface layers were made of ZnS-SiO₂ having a thickness of 10 nm. The metallic layer was made from Ag having a thickness of 100 nm. The phase-change layers were made crystalline with an initializer prior to mastering. Several write strategies have been used including an N-1 write strategy, i.e. a strategy using N-1 write pulses for a mark having the length of N times the channel bit length T. Short pulses were used to write amorphous marks in the crystalline layers. The disc has been developed with 10 % NaOH for 5 minutes.

Figure 2 shows a data pattern written on a master substrate using a first laser power according to the present invention in two different representations. The marks were written with an N-1 strategy and with a rather low write power of 30 ILV (ILV = absolute laser power). Under these conditions very small marks appear in the recording stack. After development with 10 % NaOH, 13 nm deep pits remain. An atomic force microscopy (AFM) picture of these pits is given in the lower part of Figure 2. The upper image is a cross section through the image at the black line, i.e. along the direction of recording. The arrows in the upper and the lower representations point to corresponding points.

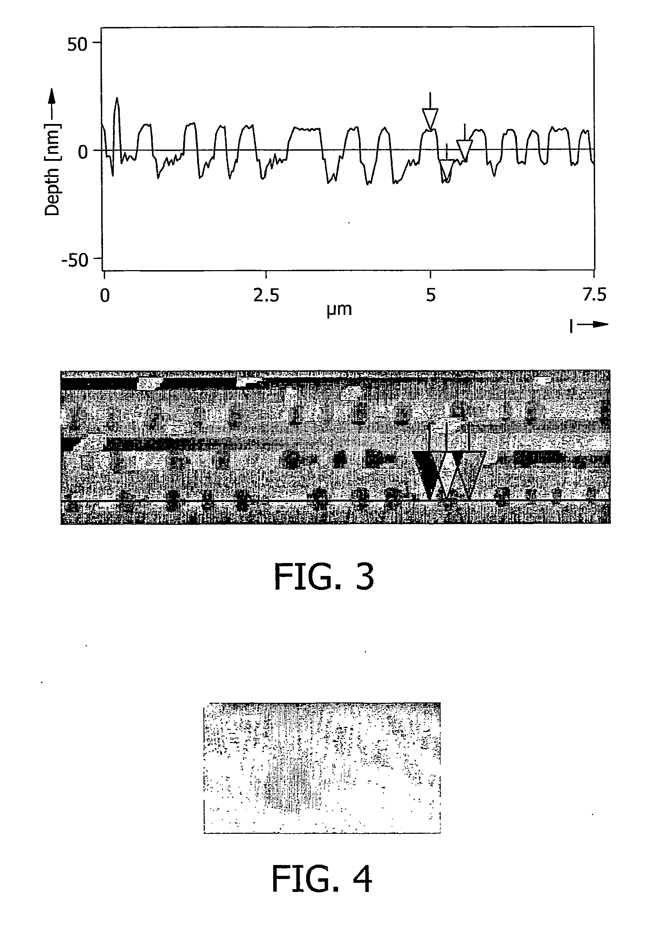

Figure 3 shows a data pattern written on a master substrate using a second laser power according to the present invention in two different representations. In this experiment, a higher write power is applied, namely ILV = 40 and higher. Now the amorphous marks extend to the second recording layer as well which can be recognized in the two representations of Figure 3. Again, the lower representation is an image on the basis of a surface scan, and the upper representation is a cross-section through the image along the black line. The pits are characterized by a typical shape. As explained before, the absorption decays with depth. Therefore, the molten area in the upper recording layer is larger than in the lower recording layer. The partially overlapping amorphous marks cause re-crystallization of the previously written amorphous material in the leading part of the mark, an effect that has been observed for too fast phase-change materials or too low recording velocities (the well-known re-crystallization during write). The amorphous area in the lower recording layer is smaller, but has a similar shape. The width of the mark at the leading part is smaller than in the upper recording layer. In this case, the re-crystallization leads to complete erasure of the leading part of the mark in the lower recording layer. The trailing part of the mark in both, the upper and lower recording layers, is hardly re-crystallized. After development, a two-level pit remains.

Figure 4 shows an enlarged image of a pit written with the second laser power. The depth of the shallow leading part is 13 nm, which is similar to the pits obtained at low write power. This means that the depth resembles the thickness of the first recording and interface layer after etching.

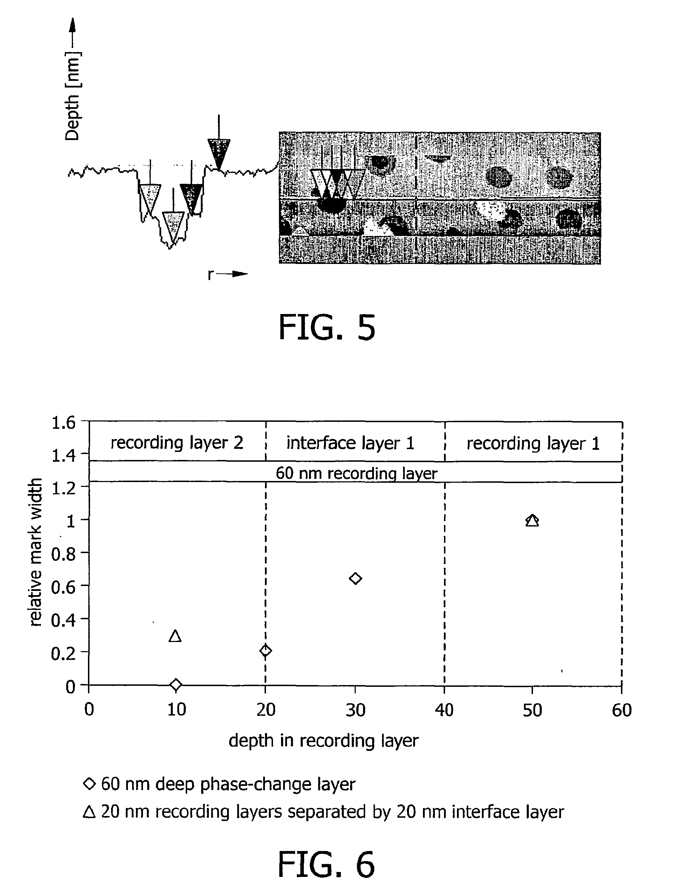

Figure 5 shows a data pattern written on a master substrate according to the present invention in two different representations. The right representation is a surface scan, the left representation is a cross-section through the right image at the dashed line in the radial direction. Again, the two-level structure is visible. The thermal response is symmetric in the radial direction, which explains the absence of the shallow part.

Figure 6 shows a diagram for comparing a single recording layer to a recording stack according to the present invention with respect to recording depth and mark width. Consider a recording stack in which the phase-change composition of the first recording layer is similar to that of the second recording layer. The molten area in the first recording layer is larger than that in the second layer because of the absorption effect. This is illustrated in Figure 6 in which the calculated relative mark width is shown for a recording stack with two 20 nm phase-change layers that are separated by a 20 nm interface layer. The mark width in recording in the first recording layer is larger than in the second recording layer because of the absorption effect. The results for a 60 nm thick phase-change layer are also plotted in Figure 6. Please notice that the light enters the stack at z=60 nm. Thus, the broadest mark is written at 60 nm, the mark becomes smaller for locations deeper in the stack (z=10 nm). The calculations show no mark formation deep in the thick (60nm) recording layer, which is in agreement with the expectations. The multi-layer stack on the contrary shows indeed mark formation in the second (deeper) recording layer. From these calculations, it is clear that with the proposed multi-layer stack, deeper and steeper pits can be made. The mark shape in the first and second recording layer can be controlled by using two phase-change compositions of different melting temperature.

The mark shape in the first and second recording layers can further be controlled by the crystallization mechanism. If the growth velocity of the phase-change material in the second recording layer is much slower than that of the composition of the first recording layer, the re-crystallization is less, thereby resulting in a larger amorphous mark. If the re-crystallization is controlled via the crystallization velocity of the material compositions, a very steep wall angle can be obtained. Also the staircase behavior can be more emphasized if the controlled re-crystallization of the second recording layer is exploited. Thus, in this case a faster phase-change material is used for the deeper recording layer.

The interface layers have no absorption resulting in less heat accumulation in the stack and deeper marks can be written. Furthermore, the phase-change layers are used as masks to etch the underlying interface layer. The layer thickness and the optical properties can be optimized to maximize the slope of the pits. With steeper walls deeper pits can be obtained.

Equivalents and modifications not described above may also be employed without departing from the scope of the invention, which is defmed in the accompanying claims.

## Claims

1. A master substrate for optical recording comprising:
a substrate layer (26), and
a multi-layer stack comprising:
- a first recording layer (12) above the substrate layer (26), **characterized in** further comprising a second recording layer (16) above the substrate layer (26)
- and an interface layer (14) between the first recording layer (12) and the second recording layer (16),
wherein the recording layers (12, 16) comprising a phase-change material, the properties with respect to chemical agents of which may be altered due to a phase-change induced by projecting light on the recording layers.

2. The master substrate according to claim 1, wherein an interface layer (18) is provided below the second recording layer (16).

3. The master substrate according to claim 1, wherein said stack comprises n pairs, n ≥ 2, of recording layers and associated interface layers.

4. The master substrate according to claim 1, wherein a heat-sink layer (24) is provided directly on top of the substrate (26).

5. The master substrate according to claim 1, wherein a protection layer (10) is provided on top of the first recording layer (12).

6. The master substrate according to claim 1, wherein the phase-change material of the first and the second recording layers (12, 16) is the same.

7. The master substrate according to claim 1, wherein the phase-change materials of the first and the second recording layers (12, 16) are different.

8. The master substrate according to claim 7, wherein the phase-change material in the first recording layer (12) is of a faster type than the phase-change material in the second recording layer (16).

9. The master substrate according to claim 7, wherein the phase-change material in the first recording layer (12) is of a slower type than the phase-change material in the second recording layer (16).

10. The master substrate according to claim 7, wherein the melt-temperature of the phase-change material in the first recording layer (12) is higher than the melt-temperature of the phase-change material in the second recording layer (16).

11. The master substrate according to claim 7, wherein the melt-temperature of the phase-change material in the first recording layer (12) is lower than the melt-temperature of the phase-change material in the second recording layer (16).

12. A method of manufacturing a high density relief structure on a master substrate according to claim 1*,*
wherein the method comprises the step of projecting light on the recording layers (12, 16), thereby altering the properties with respect to chemical agents of the recording layers due to a phase-change of the recording layers.

13. A method of producing an optical data carrier using a relief structure produced on the basis of a master substrate according to any of claims 1 to 11.

## Patentansprüche

1. Ein Mastersubstrat zum optischen Aufzeichnen umfassend:
eine Substratschicht (26), und
einen Viel-Schicht-Stapel umfassend:
eine erste Aufzeichnungsschicht (12) über der Substratschicht (26),
**dadurch gekennzeichnet, dass** weiter eine zweite Aufzeichnungsschicht (16) oberhalb der Substratschicht (26) vorhanden ist, und
eine Zwischenschicht (14) zwischen der ersten Aufzeichnungsschicht (12) und der zweiten Aufzeichnungsschicht (16),
wobei die Aufzeichnungsschichten (12, 16) ein Phasenwechsel-Material umfassen, dessen Eigenschaften in Bezug auf chemische Mittel aufgrund eines Phasenwechsels, der durch auf die Aufzeichnungsschichten projiziertes Licht verursacht wird, verändert werden können.

2. Mastersubstrat nach Anspruch 1, wobei eine Zwischenschicht (18) unterhalb der zweiten Aufzeichnungsschicht (16) vorgesehen ist.

3. Mastersubstrat nach Anspruch 1, wobei die Schicht n Paare, n ≥ 2, an Aufzeichnungsschichten und zugehörigen Zwischenschichten aufweist.

4. Mastersubstrat nach Anspruch 1, wobei eine Wärmesenkenschicht (24) direkt oberhalb des Substrats (26) vorgesehen ist.

5. Mastersubstrat nach Anspruch 1, wobei eine Schutzschicht (10) oberhalb der ersten Aufzeichnungsschicht (12) vorgesehen ist.

6. Mastersubstrat nach Anspruch 1, wobei das Phasenwechsel-Material der ersten und zweiten Aufzeichnungsschichten (12,16) das gleiche ist.

7. Mastersubstrat nach Anspruch 1, wobei die Phasenwechsel-Materialien der ersten und zweiten Aufzeichnungsschichten (12, 16) verschieden sind.

8. Mastersubstrat nach Anspruch 7, wobei das Phasenwechsel-Material der ersten Aufzeichnungsschicht (12) von einem schnelleren Typ ist als das Phasenwechsel-Material in der zweiten Aufzeichnungsschicht (16).

9. Mastersubstrat nach Anspruch 7, wobei das Phasenwechsel-Material der ersten Aufzeichnungsschicht (12) von einem langsameren Typ ist als das Phasenwechsel-Material in der zweiten Aufzeichnungsschicht (16).

10. Mastersubstrat nach Anspruch 7, wobei die Schmelztemperatur des Phasenwechsel-Materials in der ersten Aufzeichnungsschicht (12) höher als die Schmelztemperatur des Phasenwechsel-Materials in der zweiten Aufzeichnungsschicht (16) ist.

11. Mastersubstrat nach Anspruch 7, wobei die Schmelztemperatur des Phasenwechsel-Materials in der ersten Aufzeichnungsschicht (12) niedriger als die Schmelztemperatur des Phasenwechsel-Materials in der zweiten Aufzeichnungsschicht (16) ist.

12. Verfahren zum Herstellen einer hochdichten Reliefstruktur auf einem Mastersubstrat nach Anspruch 1, wobei das Verfahren den Schritt des Projizierens von Licht auf die Aufzeichnungsschichten (12, 16) umfasst, um dadurch die Eigenschaften der Aufzeichnungsschichten in Bezug auf chemische Mittel aufgrund eines Phasenwechsels der Aufzeichnungsschichten zu verändern.

13. Verfahren zum Herstellen eines optischen Datenträgers unter Benutzung einer Reliefstruktur, die auf der Basis eines Mastersubstrats nach einem der Ansprüche 1-11 hergestellt ist.

## Revendications

1. Substrat maître pour l'enregistrement optique comprenant :
une couche de substrat (26), et
un empilement multi-couches comprenant :
- une première couche d'enregistrement (12) sur la couche de substrat (26),
**caractérisé par le fait qu'**il comporte en outre une deuxième couche d'enregistrement (16) au-dessus de la couche de substrat (26),
- et une couche d'interface (14) entre la première couche d'enregistrement (12) et la deuxième couche d'enregistrement (16),
dans lequel les couches d'enregistrement (12,16) comportent un matériau à changement de phase, dont les propriétés par rapport aux agents chimiques peuvent être modifiées à cause d'un changement de phase induit par la projection de lumière sur les couches d'enregistrement.

2. Substrat maître selon la revendication 1, dans lequel une couche d'interface (18) est disposée sous la deuxième couche d'enregistrement (16).

3. Substrat maître selon la revendication 1, dans lequel ledit empilement contient n paires, n≥2, de couches d'enregistrement et de couches d'interface associées.

4. Substrat maître selon la revendication 1, dans lequel une couche de dissipation de chaleur (24) est disposée directement au-dessus du substrat (26).

5. Substrat maître selon la revendication 1, dans lequel une couche de protection (10) est disposée au-dessus de la première couche d'enregistrement (12).

6. Substrat maître selon la revendication 1, dans lequel le matériau à changement de phase de la première et de la deuxième couches d'enregistrement (12, 16) est le même.

7. Substrat maître selon la revendication 1, dans lequel les matériaux à changement de phase de la première et de la deuxième couches d'enregistrement (12, 16) sont différents.

8. Substrat maître selon la revendication 7, dans lequel le matériau à changement de phase dans la première couche d'enregistrement (12) est d'un type plus rapide que le matériau à changement de phase dans la deuxième couche d'enregistrement (16).

9. Substrat maître selon la revendication 7, dans lequel le matériau à changement de phase dans la première couche d'enregistrement (12) est d'un type plus lent que le matériau à changement de phase dans la deuxième couche d'enregistrement (16).

10. Substrat maître selon la revendication 7, dans lequel la température de fusion du matériau à changement de phase dans la première couche d'enregistrement (12) est plus élevée que la température de fusion du matériau à changement de phase dans la deuxième couche d'enregistrement (16).

11. Substrat maître selon la revendication 7, dans lequel la température de fusion du matériau à changement de phase dans la première couche d'enregistrement (12) est plus faible que la température de fusion du matériau à changement de phase dans la deuxième couche d'enregistrement (16).

12. Procédé de fabrication d'une structure en relief de haute densité sur un substrat maître selon la revendication 1,
dans lequel le procédé comprend l'étape de projection de lumière sur les couches d'enregistrement (12,16), modifiant ainsi les propriétés par rapport aux agents chimiques des couches d'enregistrement à cause d'un changement de phase des couches d'enregistrement.

13. Procédé de production d'un support de données optique utilisant une structure en relief produite à partir d'un substrat maître selon l'une quelconque des revendications 1 à 11.
